# EUROPEAN PATENT APPLICATION

(11) **EP 2 264 086 A1**
(43) Date of publication of application: **22.12.2010**
(21) Application number: 09725621.8
(22) Date of filing: 26.03.2009
(51) Int. Cl.: C08J 5/00, B32B 15/08, B60K 15/03

(54) **MOLDED BODY FOR BIODIESEL FUEL**

(30) Priority: 27.03.2008 JP 2008084361
(71) Applicant: Daikin Industries, Ltd., Osaka 530-8323 (JP)
(72) Inventor: SAGISAKA, Shigehito, Settsu-shi Osaka 566-8585 (JP); KOMORI, Hirokazu, Settsu-shi Osaka 566-8585 (JP); INABA, Takeshi, Settsu-shi Osaka 566-8585 (JP); HIRAO, Takayuki, Settsu-shi Osaka 566-8585 (JP); SHIMONO, Takeshi, Settsu-shi Osaka 566-8585 (JP)
(74) Representative: HOFFMANN EITLE
(86) International application number: PCT/JP2009/056141
(87) International publication number: WO 2009/119747

(57) **Abstract**

The present invention provides a molded article for a biodiesel fuel having excellent durability against a biodiesel fuel. The invention is a molded article for a biodiesel fuel of which the surface to be contacted with a biodiesel fuel is made of a fluorine-containing ethylenic resin.

## Description

### TECHNICAL FIELD

The present invention relates to a molded article for a biodiesel fuel.

### BACKGROUND ART

Biodiesel fuels have attracted attention in recent years as a measure against global warming. Biodiesel fuels are known to cause swelling or degradation of a rubber, a resin and the like that are used in automobile parts. In particular, oxidation of a biodiesel fuel on account of heat and pressure accelerate the degradation of the rubber, the resin and the like by giving rise to a peroxide and an acid.

An already proposed rubber or resin having improved durability against a biodiesel fuel includes, for instance, a sulfur-curable rubber composition in which magnesium oxide is mixed into a blended material of hydrogenated NBR and PVC (Patent document 1) ; a hose for fuel having an inner layer formed by using a polyolefin resin and a carbon component (Patent document 2) ; a constituent element of a fuel management system, having a surface that comprises a fluoroelastomer layer in which a hydrotalcite compound is dispersed (Patent document 3); a polyoxymethylene resin composition comprising polyoxymethylene, an antioxidant, and 0.01 to 2.0 parts by weight of a hindered amine light stabilizer and/or a hydrotalcite having a specific structure (Patent document 4); and an ethylene homopolymer and copolymer stabilized by a sterically hindered amine or by a N-hydroxy or N-oxyl derivative thereof (Patent document 5).

However, the above rubber or resin requires an additive such as a filler, a chemical and the like, and is problematic in terms of leaching. The rubber and the resin, moreover, have insufficient resistance to a chemical, which is likewise problematic.

Patent document 1: Japanese Patent Application Publication No. 2007-269862
Patent document 2: Japanese Patent Application Publication No. 2006-205464
Patent document 3: WO 2004/067618
Patent document 4: Japanese Patent Application Publication No. 2004-59720
Patent document 5: WO 99/032549

### DISCLOSURE OF THE INVENTION

In the light of the above, it is an object of the present invention to provide a molded article for a biodiesel fuel having excellent durability against a biodiesel fuel.

The present invention is a molded article for a biodiesel fuel wherein the surface to be contacted with a biodiesel fuel is made of a fluorine-containing ethylenic resin.

The present invention is explained in detail below.

The molded article for a biodiesel fuel of the present invention comprises a surface to be contacted with a biodiesel fuel made of a fluorine-containing ethylenic resin. As a result, the molded article of the present invention has very high durability against a biodiesel fuel.

As used in the present description, the term biodiesel fuel includes a fuel for diesel engines that is obtained by processing and/or purifying biomass as a starting material. Examples of the biodiesel fuel includes, for instance, fuels refined from oils and fats, aliphatic alkyl esters resulting from alkyl esterification of oils and fats, fuels (BHD) resulting from hydrogenation of oils and fats, and liquid fuels (BTL-FT fuels) synthesized from a starting material such as methane or the like that in turn is generated from biomass. The biodiesel fuel includes also a mixture of the above fuels with known fossil fuels (diesel oil).
The molded article for a biodiesel fuel of the present invention can be used in a wide variety of instances, from a diesel fuel having small amounts of the biodiesel fuel added thereto, up to 100% biodiesel. The molded article for a biodiesel fuel of the present invention is preferably used, in particular, in a fuel to which 20% or more of the biodiesel fuel is added.

Examples of the aliphatic alkyl ester include, for instance, an aliphatic methyl ester and an aliphatic ethyl ester. The aliphatic alkyl ester may result from esterification of an animal oil and fat or esterification of a vegetable oil and fat.

Examples of the above oils and fats include, for instance, a vegetable oil and fat such as rapeseed oil, sunflower oil, soybean oil, corn oil, palm oil, olive oil, rice bran oil, coconut oil, or an animal oil and fat such as fish oil, beef tallow, or waste edible oil thereof.

As is known, the biodiesel fuel above degrades on account of heat and pressure, and gives rise as a result to an organic peroxide and an acid. The above characteristic is prominent when the oil or fat, or an aliphatic alkyl ester derived therefrom, contains a double bond in the main chain. The molded article for a biodiesel fuel of the present invention affords hitherto unknown durability also against instances of the degraded biodiesel fuel such as that mentioned above.

To achieve superior durability against a biodiesel fuel, the above-mentioned fluorine-containing ethylenic resin has preferably a halogen content not smaller than 60wt%, yet more preferably not smaller than 67wt%, and even yet more preferably not smaller than 75wt%.

The fluorine-containing ethylenic resin is preferably at least one resin selected from the group consisting of tetrafluoroethylene (TFE) /perfluoro(alkylvinyl ether) (PAVE) copolymers, tetrafluoroethylene/hexafluoropropylene (HFP) copolymers, ethylene (Et)/tetrafluoroethylene copolymers, ethylene/tetrafluoroethylene/hexafluoropropylene copolymers, polychlorotrifluoroethylene (PCTFE), ethylene/chlorotrifluoroethylene (CTFE) copolymers, tetrafluoroethylene/chlorotrifluoroethylene copolymers, and vinylidene fluoride (VdF)/tetrafluoroethylene/hexafluoropropylene copolymers.

In the present description, the term resin denotes a material that melts at a temperature not lower than room temperature (25°C) and that has a crystallization peak, and is thus clearly distinct from a rubber and an elastomer. As used in the present description, the term polymer includes resins, rubbers and elastomers, although the polymer is necessarily a resin for instance in case of a "TFE/HFP copolymer constituting the fluorine-containing ethylenic resin"

In terms of eliciting superior durability against a biodiesel fuel, the fluorine-containing ethylenic resin is more preferably at least one resin selected from the group consisting of TFE/PAVE copolymers, TFE/HFP copolymers, PCTFE, Et/CTFE copolymers, TFE/CTFE copolymers, and VdF/TFE/HFP copolymers, and yet more preferably is at least one resin selected from the group consisting of TFE/PAVE copolymers, TFE/HFP copolymers, PCTFE and TFE/CTFE copolymers. The TFE/CTFE copolymer is particularly preferred as the fluorine-containing ethylenic resin.
Preferable, the TFE/CTFE copolymer is at least one copolymer selected from the group consisting of CTFE/TFE, CTFE/TFE/HFP copolymers, CTFE/TFE/VdF copolymers, and CTFE/TFE/PAVE copolymers, and more preferably, the TFE/CTFE copolymer is a CTFE/TFE/PAVE copolymer.

The molded article for a biodiesel fuel of the present invention may comprise a fluorine-containing ethylenic resin layer on a metal member. Corrosion and rusting of the metal member due to the biodiesel fuel can be prevented by covering the metal member with a fluorine-containing ethylenic resin layer.

The molded article for a biodiesel fuel of the present invention may comprise, on a metal member, a laminate comprising a fluorine-containing ethylenic resin layer and a fluorine-free organic material layer. Through appropriate selection of the adhesiveness of the fluorine-free organic material, the laminate having a fluorine-containing ethylenic resin layer and a fluorine-free organic material layer affords greater adhesiveness to the metal member than is the case for a single layer or multiple layers comprising the fluorine-containing ethylenic resin alone. The above laminate has excellent mechanical strength. Therefore, covering the metal member with the laminate allows preventing the metal member from being damaged by the biodiesel fuel, while increasing the durability against physical damage.

The metal member may be a metal member ordinarily used in automobile parts, and may be, gold, silver, copper, aluminum, iron, stainless steel, nickel, chrome-plated steel, zinc-plated steel, galvanized steel, magnesium or the like.

The molded article for a biodiesel fuel of the present invention may comprise a laminate comprising a fluorine-containing ethylenic resin layer and a fluorine-free organic material layer. A molded article for a biodiesel fuel comprising such a laminate can be suitably used as a tube, hose or tank having excellent durability against the biodiesel fuel.

The above fluorine-containing ethylenic resin layer may have a multilayer structure comprising two or more laminated layers of one, two or more kinds of the fluorine-containing ethylenic resin, or may have a multilayer structure of two or more laminated layers of the fluorine-containing ethylenic resin and a fluorine-containing ethylenic polymer. The fluorine-free organic material layer may have a multilayer structure of two or more layers of one, two or more fluorine-free organic materials. Specific such multilayer structures are described below.

The fluorine-containing ethylenic resin layer may be at least one layer selected from the group consisting of a layer (C) comprising a CTFE copolymer; a layer (P) comprising a perhalogenated fluorine-containing ethylenic polymer other than a CTFE copolymer; and a layer (F) comprising a non-perhalogenated fluorine-containing ethylenic polymer other than the CTFE copolymer. In the present description, the term "perhalogenated fluorine-containing ethylenic polymer" denotes an ethylenic polymer wherein the main monomer unit in the molecular structure of the polymer is completely halogenated, and the majority of the halogen is fluorine. The term main monomer unit denotes a monomer unit derived from one, two or more kinds of monomer that determine characteristics of the polymer such as melting point. Ordinarily, the main monomer is a monomer unit derived from monomers that account for 80mol% or more of monomers from which derive all the monomer units in the molecular structure of the polymer. The mole fraction of the main monomer may be, for instance, 100mol%.

When the layer (C) comprises a CTFE copolymer, the molded article for a biodiesel fuel of the present invention has excellent interlayer adhesiveness, fuel impermeability and oxidation resistance.

The CTFE copolymer constituting the layer (C), preferably has an melt flow rate (MFR) of 15.0 to 40.0 (g/10 minutes) . When the MFR is within the above range, good moldability as well as good environmental cracking resistance for a fuel and fuel impermeability can be obtained. A more preferred lower limit to the MFR is 19.0 (g/10 minutes), a more preferred upper limit thereto is 37.0 (g/10 minutes).

The MFR of the CTFE copolymer is a value obtained through measurement according to ASTM D1238 under conditions of 297°C and load 49 N.

The CTFE copolymer preferably contains 15 to 25 mole percent of CTFE units relative to all monomer units. When the CTFE unit content is within the above range, the copolymer is excellent in fuel impermeability and the environmental cracking resistance for a fuel. A more preferred lower limit to the CTFE unit content is 18 mole percent. A more preferred upper limit thereto is 23 mole percent.

In the practice of the invention, the contents of the respective monomers in the copolymer are values obtained by an appropriate combination of the ¹⁹F-NMR and other analyses, specifically the NMR analysis, the infrared spectrophotometry [IR], the elemental analysis and the fluorescent X ray analysis as employed according to the monomer species.

The CTFE copolymer is preferably one constituted of CTFE units and monomer (A) units derived from a monomer (A) copolymerizable with CTFE (hereinafter such copolymer is sometimes referred to as "CTFE copolymer (I)").

The term "unit" as used herein referring to a certain monomer means that the section which is derived from the monomer and constitutes a part of the molecular structure of a polymer. For example, each "CTFE unit", as mentioned above, is the CTFE-derived section [-CFCl-CF₂-] in the molecular structure of the CTFE copolymer. Likewise, each "monomer (A) unit", as mentioned above, is the section resulting from addition of the monomer (A) in the molecular structure of the CTFE copolymer. As used herein, the mole percent for each monomer unit species is a percentage of the monomer from which monomer units of that species are derived, with the total number of moles of those monomers from which all monomer units constituting the molecular chain of the copolymer are derived being taken as 100 mole percent.

The monomer (A) is not particularly restricted but may be any monomer copolymerizable with CTFE. It may comprise one single species or two or more species. It includes THE, Et, VdF, a fluoroolefin represented by the general formula (i):

CX³X⁴=CX¹(CF₂)ₙX² (i)

(wherein X¹, X³ and X⁴ are the same or different and each represents hydrogen atom or fluorine atom, X² represents hydrogen atom, fluorine atom or chlorine atom and n represents an integer of 1 to 10), a PAVE represented by the general formula (ii):

CF₂=CF-ORf¹ (ii)

(wherein Rf¹ represents a perfluoroalkyl group containing 1 to 8 carbon atoms), and alkyl perfluorovinyl ether derivatives represented by the general formula (iii):

CF₂=CF-OCH₂-Rf² (iii)

(wherein Rf² represents a peru group containing 1 to 5 carbon atoms), among others.

The monomer (A) preferably comprises at least one species selected from a group consisting of TFE, Et, VdF, the fluoroolefin represented by the general formula (i), and the PAVE represented by the general formula (ii).

The monomer (A) may comprise one single species or a combination of two or more species each of the fluoroolefin represented by the general formula (i), the PAVE represented by the general formula (ii), and/or the alkyl perfluorovinyl ether derivative of general formula (iii).

The fluoroolefin represented by the general formula (i) is not particularly restricted but includes, among others, HFP. perfluoro(1,1,2-trihydro-1-hexene), perfluoro(1,1,5-trihydro-1-pentene) and a perfluoro(alkyl)ethylene represented by the general formula (iv):

H₂C=CX⁵Rf³ (iv)

(wherein X⁵ is H, F or CF₃ and Rf³ is a perfluoroalkyl group containing 1 to 10 carbon atoms).

Preferred as the perfluoro(alkyl)ethylene is perfluoro(butyl)ethylene.

As PAVE represented by the general formula (ii), there may be mentioned perfluoro(methyl vinyl ether) [PMVE], perfluoro(ethyl vinyl ether) [PEVE], perfluoro(propyl vinyl ether) [PPVE] and perfluoro(butyl vinyl ether), among others, and PMVE, PEVE or PPVE is preferred.

Preferred as the alkyl perfluorovinyl ether derivative represented by the general formula (iii) is one in which Rf² is a perfluoroalkyl group containing 1 to 3 carbon atoms. CF₂=CF-OCH₂-CF₂CF₃ is more preferred.

Also usable as the monomer (A) is an unsaturated carboxylic acid copolymerizable with CTFE.

The unsaturated carboxylic acid copolymerizable with CTFE is not particularly restricted but includes unsaturated aliphatic carboxylic acids containing 3 to 6 carbon atoms, also including unsaturated aliphatic polycarboxylic acids containing 3 to 6 carbon atoms, such as, for example, (meth) acrylic acid, crotonic acid, maleic acid, fumaric acid, itaconic acid, citraconic acids, mesaconic acid and aconitic acid.

The unsaturated aliphatic polycarboxylic acid containing 3 to 6 carbon atoms is not particularly restricted but include, among others, maleic acid, fumaric acid, itaconic acid, citraconic acid, mesaconic acid and aconitic acid, and an acid anhydride thereof when they can take an acid anhydride form, such as maleic acid, itaconic acid and citraconic acid.

While the monomer (A) may comprise two or more species, a combined use of itaconic acid, citraconic acid, and/or the acid anhydride thereof may not be necessary when one of the species comprises VdF, a PAVE or HFP.

The CTFE copolymer (I) is preferably composed of 15 to 25 mole percent of CTFE unites and 85 to 75 mole percent of monomer [A] units, preferably 18 to 23 mole percent of CTFE units and 82 to 77 mole percent of monomer [A] units.

The CTFE copolymer is preferably a CTFE copolymer constituted of CTFE units, TFE units and monomer (M) units derived from a monomer (M) copolymerizable with CTFE and TFE (hereinafter such copolymer is sometimes referred to as "CTFE copolymer (II)".

Each "THE unit" so referred to herein is the segment [-CF₂-CF₂-] derived from TFE and occurring in the molecular structure of the CTFE copolymer (II). Similarly, each "monomer (M) unit" is a segment derived from the monomer (M) by addition thereof to the molecular structure of the CTFE copolymer.

The monomer (M) is not particularly restricted but may be any monomer copolymerizable with CTFE and THE. As examples, there may be mentioned those enumerated hereinabove referring to the monomer (A), excluding TFE.

The monomer (M) preferably comprises at least one species selected from the group consisting of Et, VdF, the fluoroolefin represented by the general formula (i) and the PAVE represented by the general formula (ii) given hereinabove.

In the CTFE copolymer (II), CTFE units and TFE units, in total, preferably account for 90.0 to 99.9 mole percent, and monomer (M) units for 10.0 to 0.1 mole percent. When the monomer (M) unit content is below 0.1 mole percent, moldability, an environmental stress cracking resistance and the environmental cracking resistance for a fuel tend to become inferior and, when it is in excess of 10.0 mole percent, fuel impermeability, heat resistance and mechanical properties tend to become inferior.

The CTFE unit content is preferably 15.0 to 30.0 mole percent of the sum of CTFE units and TFE units. When the CTFE unit content relative to the sum of CTFE units and TFE units is lower than 15.0 mole percent, fuel impermeability may become insufficient and, when it is in excess of 30.0 mole percent, the environmental cracking resistance for a fuel may become decreased and productivity may lower. A more preferred lower limit is 17.0 mole percent, a still more preferred lower limit is 19.0 mole percent, a more preferred upper limit is 26.0 mole percent, and a still more preferred upper limit is 24.0 mole percent.

When the monomer (M) is the PAVE, a more preferred lower limit to the monomer (M) unit content is 0.5 mole percent, a more preferred upper limit thereto is 5 mole percent.

When the term "CTFE copolymer" is used herein without adding such a symbol (I) or (II), the term includes, within the meaning thereof, both the CTFE copolymers (I) and the CTFE copolymers (II).

The CTFE copolymer constituting the layer (C) may be a binary copolymer or a terpolymer or further a multicomponent copolymer. As the binary copolymer, there may be mentioned a CTFE/TFE copolymer, a CTFE/PAVE copolymer, a CTFE/VdF copolymer, and a CTFE/HFP copolymer, among others. As the terpolymer (ternary polymer) and further the multicomponent copolymer, there may be mentioned a CTFE/TFE/HFP copolymer, a CTFE/TFE/VdF copolymer, a CTFE/TFE/PAVE copolymer, a CTFE/TFE/HFP/PAVE copolymer and a CTFE/TFE/VdF/PAVE copolymer, among others. Among them, the CTFE/TFE/PAVE copolymer is preferred.

The CTFE copolymer mentioned above may be a copolymer of CTFE and Et and/or a fluoromonomer. As the CTFE copolymer having such a copolymer composition, there may be mentioned, for example, a CTFE/Et copolymer, a CTFE/TFE/Et copolymer, a CTFE/TFE/PAVE copolymer and CTFE/TFE/Et/PAVE copolymer.

The above CTFE copolymer can be obtained by any of the polymerization methods known in the art, for example solution polymerization, emulsion polymerization and suspension polymerization. However, it is preferably one obtained by suspension polymerization from an industrial viewpoint.

The CTFE copolymer preferably has a melting point [Tm] of 150 to 28C°C. A more preferred lower limit is 160°C, a still more preferred lower limit is 170°C, a particularly preferred lower limit is 190°C, and a more preferred upper limit is 260°C.

The melting point [Tm] is a temperature corresponding to a melting peak as observed upon raising a temperature at a rate of 10°C/minute using a differential scanning calorimeter [DSC].

The CTFE copolymer mentioned above, when subjected to a heating test, preferably shows a temperature [Tx] of not lower than 370°C at which 1% by mass of the CTFE copolymer is decomposed. A more preferred lower limit is 380°C and a still more preferred lower limit is 390°C. Within the above range, an upper limit to the above-defined thermal decomposition temperature [Tx] may be set at 450°C, for instance.

The thermal decomposition temperature [Tx] is a value obtained by using an apparatus for thermogravimetry/differential thermal analyzer [TG-DTA] and measuring a temperature at which a loss in mass of the CTFE copolymer subjected to the heating test amounts to 1% by mass.

The above CTFE copolymer preferably shows a difference [Tx - Tm] of 130°C or greater between the melting point [Tm] and the temperature [Tx] causing 1% by mass decomposition of the CTFE copolymer. When such difference is smaller than 130°C, the temperature range within which molding is possible becomes so narrow that the range of choice of molding conditions may become narrow. Because of its broad temperature range within which a molding is possible, as mentioned above, the CTFE copolymer mentioned above, when subjected to a coextrusion molding, can be coextruded with a high-melting-point polymer as a counterpart.

In the case of melt molding or heat treatment at a temperature lower than 320°C, the TFE copolymer of the invention preferably contains an adhesive functional group or groups. The term "adhesive functional group" as used herein means a group which constitutes a part of the molecular structure of a polymer contained in the CTFE copolymer and is capable of participating in adhesion between the layer (C) comprising the CTFE copolymer and a layer adjacent to the layer (C). The adhesive functional group may be any moiety capable of being involved in such an adhesion and includes, within the meaning thereof, those generally called functional groups but also those generally called bonds such as ether bonding.

The adhesive functional group is not particularly restricted but may be any of those capable of being involved in adhesion between the layer (C) and the layer adjacent to the layer (C), including carbonyl, hydroxyl and amino group, among others.

The "carbonyl group" so referred to herein is a divalent carbon-containing group comprising a carbon-oxygen double bond, typically the group represented by -C(=O)-. The carbonyl group is not particularly restricted but may be, for example, a carbonate group, a haloformyl group, formyl group, carboxyl group, ester bond [-C(=O)O-], an acid anhydride bond [-C(=O)O-C(=O)-], isocyanato group, amide group, imide group [-C(=O)-NH-C(=O)-], urethane bond [-NH-C(=O)O-], carbamoyl group [NH₂-C(=O)-], carbamoyloxy group [NH₂-C(=C)O-], ureido group [NH₂-C(=O)-NH-] or oxamoyl group [NH₂-C(=O)-C(=O)-] or the like one containing -C(=O)- as a part of the chemical structure.

The amide group mentioned above is a group represented by the general formula:

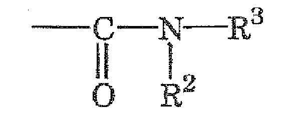

(wherein R² represents hydrogen atom or an organic group and R³ represents an organic group).

The hydrogen atom or atoms each bound the nitrogen atom in the above-mentioned amide group, imide group, urethane bond, carbamoyl group, carbamoyloxy group, ureido group or oxamoyl group, for instance, each may be substituted by a hydrocarbon group such as an alkyl group.

Preferred as the adhesive functional group is amide, carbamoyl, hydroxyl, carboxyl or carbonate group since these are easy to introduce and a coating obtained show proper heat resistance and a good adhesion at relatively low temperatures; among them, carbonate groups is preferred.

The above-mentioned carbonate group is represented by -OC(=O)O-R (in which R represents an organic group). As the organic group R in the above formula, there may be mentioned, for example, an alkyl group containing 1 to 20 carbon atoms, an ether bond-containing alkyl group containing 2 to 20 carbon atoms, etc.; among them, an alkyl group containing 1 to 8 carbons, an ether bond-containing alkyl group containing 2 to 4 carbon atoms and the like are preferred. For example, -OC(=O)OCH₃, -OC(=O)OC₃H₇, -OC(=O)OC₉H₁₇, -OC(=O)OCH₂CH₂CH₂OCH₂CH₃ and the like may be mentioned as preferred examples.

When the CTFE copolymer is an adhesive functional group-containing one, the copolymer may comprise a polymer containing the adhesive functional group or groups at one or each main chain terminus or on one or more side chains or a polymer containing such groups at one or each main chain terminus and in one or more side chains. When the polymer main chain is an adhesive functional group-terminated one, each of the both termini of the main chain may have such groups, or only either one of the termini may have such group. When the CTFE copolymer contains such an adhesive functional group or groups as mentioned above at one or each main chain terminus and/or in a side chain(s) and/or contains an adhesive functional group or groups each in the structural forum generally called a bond such as an ether bond, such an adhesive functional group or groups may be contained in the main chain. That the CTFE copolymer comprises a polymer whose main chain is the adhesive functional group-terminated one is preferred for a reason that such a group or groups will not markedly lower the mechanical properties or chemical resistance of the copolymer and for reasons of advantageousness from productivity and a cost viewpoint.

The CTFE copolymer which comprises a polymer having adhesive functional group-containing side chains can be obtained by copolymerizing adhesive functional group-containing monomer with CTFE monomer and the monomer (A), or, with CTFE monomer, TFE monomer and the monomer (M). The term "adhesive functional group-containing monomer" as used herein means a polymerizable monomer containing the adhesive functional group. The adhesive functional group-containing monomer may or may not contain fluorine atom (s). Since, however, the above-mentioned monomer (A) and monomer (M) have no adhesive functional group and, in this respect, are conceptually distinguished from the adhesive functional group-containing monomer which has the adhesive functional group.

Preferred as the adhesive functional group-containing monomer is an unsaturated compound represented by the general formula (v):

CX⁶₂=CY¹-(R¹)ₙ-Z¹ (v)

wherein Z¹ represents a hydroxyl-, carbonyl- or amino group-containing functional group, X⁶ and Y¹ are the same or different and each represents hydrogen atom or fluorine atom, R¹ represents an alkylene group containing 1 to 40 carbon atoms, an oxyalkylene group containing 1 to 40 carbon atoms, an ether bond-containing alkylene group containing 2 to 40 carbon atoms or an ether bond-containing oxyalkylene group containing 2 to 40 carbon atoms, in each of which a part or all of the hydrogen atoms may be substituted by fluorine atom or atoms, and n represents 0 or 1. By saying "hydroxyl, carbonyl or amino group-containing functional group" herein, it is meant that the functional group in question may be hydroxyl group or carbonyl group or amino group or a functional group containing any of these adhesive functional groups.

When the adhesive functional group is a carbonyl group-containing one, the above-mentioned adhesive functional group-containing monomer includes, among others, such a fluoromonomer as perfluoroacryloyl fluoride, 1-fluoroacryloyl fluoride, acryloyl fluoride, 1-trifluoromethacryloyl fluoride and perfluorobutenoic acid; and such a fluorine-free monomer as acryloyl chloride and vinylene carbonate.

The above-mentioned adhesive functional group-containing monomer further includes unsaturated carboxylic acids. The unsaturated carboxylic acids as adhesive functional group-containing monomers, as so referred to herein, are preferably those ones which have at least one carbon-carbon unsaturated bond enabling copolymerization thereof (hereinafter also referred to as "copolymerizable carbon-carbon unsaturated bond") per molecule and further have at least one carbonyloxy group [-C(=O)-O-] per molecule.

As the above-mentioned unsaturated carboxylic acid as the adhesive functional group-containing monomer, there may be mentioned, for example, an aliphatic unsaturated carboxylic acid and an acid anhydride thereof. The aliphatic unsaturated carboxylic acid may be aliphatic unsaturated monocarboxylic acid or aliphatic unsaturated polycarboxylic acid containing two or more carboxyl groups.

As the aliphatic unsaturated monocarboxylic acid, there may be mentioned aliphatic monocarboxylic acid containing 3 to 20 carbon atoms, for example propionic acid, acrylic acid, methacrylic acid, crotonic acid, and an anhydride thereof. As the aliphatic unsaturated polycarboxylic acid, there may be mentioned maleic acid, fumaric acid, mesaconic acid, citraconic acid [CAC], itaconic acid, aconitic acid, itaconic anhydride [IAH] and citraconic anhydride [CAH], among others.

Among the adhesive functional groups, those occurring at a main chain terminus (hereinafter also referred to as "unstable terminal groups") include the carbonate group, -COF, -COOH, -COOCH₃, -CONH₂, -CH₂OH and the like. Such an unstable terminal group is generally formed at a main chain terminus upon addition of a chain transfer agent or a polymerization initiator used on the occasion of polymerization and is derived from the structure of the chain transfer agent or polymerization initiator.

The CTFE copolymer, when it comprises the polymer whose main chain is an adhesive functional group-terminated one in which the adhesive functional group is the carbonate group, can be obtained by a method of polymerization using a peroxycarbonate as the polymerization initiator. The use of such method is preferred in view of the fact that carbonate group introduction and control of such introduction are very easy to make and also from an economic viewpoint and from a viewpoint of qualities, including the heat resistance and the chemical resistance, among others.

Preferred as the peroxycarbonate is a compound represented by one of the following formulas:

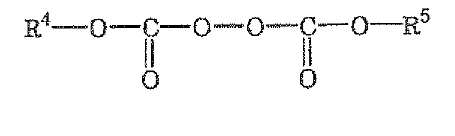

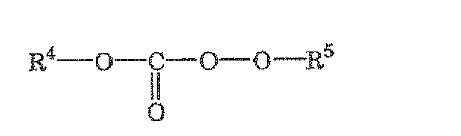

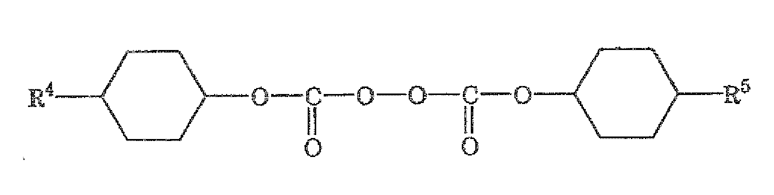

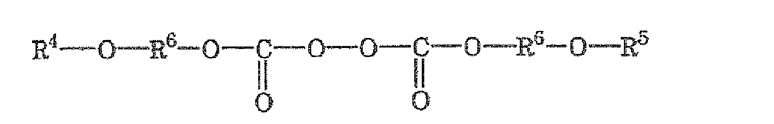

(In the above formulas, R⁴ and R⁵ are the same or different and each represents a straight or branched monovalent saturated hydrocarbon group containing 1 to 15 carbon atoms or an alkoxyl group-terminated straight or branched monovalent saturated hydrocarbon group containing 1 to 15 carbon atoms, and R⁶ represents a straight or branched divalent saturated hydrocarbon group containing 1 to 15 carbon atoms or an alkoxyl group-terminated straight or branched divalent saturated hydrocarbon group containing 1 to 15 carbon atoms.)

Preferred as the peroxycarbonate, among others, is diisopropyl peroxycarbonate, di-n-propyl peroxydicarbonate, tert-butylperoxy isopropyl carbonate, bis(4-tert-butylcyclohexyl) peroxydicarbonate and di-2-ethylhexyl peroxydicarbonate.

When the CTFE copolymer comprises the polymer whose main chain is the adhesive functional group-terminated one in which the adhesive functional group is other than the carbonate group, a peroxide-derived adhesive functional group can be introduced therein, like in the case of the above-mentioned carbonate group introduction, by carrying out a polymerization using such a peroxide as a peroxycarbonate, peroxydicarbonate, peroxy ester or peroxyalcohol as the polymerization initiator. By saying "peroxide-derived", it is meant that the functional group in question is introduced directly from the functional group contained in the peroxide or indirectly by conversion of the functional group introduced directly from the functional group contained in the peroxide.

A level of addition of the polymerization initiator such as a peroxycarbonate or peroxy ester is preferably 0.05 to 5 parts by mass per 100 parts by mass of the polymer to be obtained, although it may vary depending on the kind, composition and molecular weight of a desired fluororesin, the polymerization conditions and the initiator species used, among others. A more preferred lower limit is 0.1 parts by mass, and a more preferred upper limit is 1 part by mass.

The number of adhesive functional groups can be properly selected according to the differences, among others, in the kind and shape of the counterpart material for lamination, a purpose of adhesion, an intended use, a bond strength required and a method of bonding the CTFE copolymer layer (C) to the adjacent layer.

In the case of melt molding at a molding temperature, lower than 320°C, the number of unstable terminal groups preferably 3 to 800 per 1 x 10⁶ carbon atoms in the main chain. When that number is not larger than 3 per 1 x 10⁶ carbon atoms, the adhesiveness may decrease in certain cases. A more preferred lower limit is 50, a still more preferred lower limit is 80, and a particularly preferred lower limit is 120. When the number of unstable terminal groups is within the above range in the case of melt molding at a molding temperature lower than 320°C, an upper limit may be set, for example, at 500 from the productivity viewpoint.

The number of unstable terminal groups is a number obtained by a compression molding the CTFE copolymer in a powder form at a molding temperature higher by 50°C than the melting point thereof and at a molding pressure of 5 MPa, subjecting the thus-obtained film sheet with the thickness of 0.25 to 0.30 mm to infrared absorption spectrometry [IR], determining the species by comparison with the infrared absorption spectra for known films and making a calculation based on a differential spectrum thereof according to the following formula:
Number of terminal groups (per 10⁶ carbon atoms) = (1 x K)/t where:
   - 1 :: Absorbance
   - K :: Correction factor
   - t :: Film thickness (mm)
   The correction factors for the terminal groups in question are shown in Table 1.

**[Table 1]**

| Terminal group | Absorption wave number (cm⁻¹) | Correction factor |
|---|---|---|
| -COF | 1884 | 405 |
| -COOH | 1813, (1795-1792), 1775 | 455 |
| -COOCH₃ | 1795 | 355 |
| -CONH₂ | 3438 | 408 |
| -CH₂OH | 3648 | 2325 |
| -OC(=O)O-R | 1817 | 1426 |

The correction factors given in Table 1 are the values determined from the infrared absorption spectra of model compounds for calculating the number of corresponding terminal groups per 1 x 10⁶ carbon atoms in the main chain.

When it comprises the layer (P) comprising a perhalogenated fluorine-containing ethylenic polymer other than the CTFE copolymer, the molded article for a biodiesel fuel of the invention is excellent in chemical resistance and heat resistance.

As the perhalogenated fluorine-containing ethylenic polymer, there may be mentioned a copolymer (III) composed at least of TFE units and perfluoro monomer units derived from a perfluoro monomer represented by the general formula (vi): CF₂=CF-Rf⁵ (vi)
wherein Rf⁵ represents CF₃ or ORf⁶ in which Rf⁶ represents a perfluoroalkyl group containing 1 to 5 carbon atoms. The perfluoro monomer units may be ones derived from one species or two or more species.

As the perhalogenated fluorine-containing ethylenic polymer, there may be mentioned PCTFE as well.

As the copolymer (III), there may be mentioned, for example:
(III-I) A copolymer having a TFE unit content of 70 to 95 mole percent, preferably 85 to 93 mole percent, and an HFP unit content of 5 to 30 mole percent, preferably 7 to 15 mole percent;
(III-II) A copolymer having a TFE unit content of 70 to 95 mole percent and a PAVE unit content of 5 to 30 mole percent, wherein the PAVE unit content is the total content of units derived from one or two or more PAVE species represented by the general formula (vii):

   CF₂=CF-ORf⁷ (vii)

   (wherein Rf⁷ represents a perfluoroalkyl group containing 1 to 5 carbon atoms); and
(III-III) A copolymer having a TFE unit content of 70 to 95 mole percent and a sum of the HFP unit content and PAVE unit content of 5 to 30 mole percent, wherein the PAVE unit content is of one PAVE unit species or of two or more PAVE unit species.

The PAVE unit may be of one species or of two or more species.
Such copolymers (III) as mentioned above are not particularly restricted but, for example, one of them may be used singly or two or more of them may be used in combination.

When it comprises the layer (F) comprising a non-perhalogenated fluorine-containing ethylenic polymer other than the CTFE copolymer, the molded article for a biodiesel fuel of the invention is excellent in the adhesiveness and melt processability.

As the non-perhalogenated fluorine-containing ethylenic polymer, there may be mentioned a copolymer (IV) composed at least of TFE units and Et units.

As the non-perhalogenated fluorine-containing ethylenic polymer, there may further be mentioned a copolymer (V) composed at least of VdF units.

As the copolymer (IV), there may be mentioned, for example, a polymer having a TFE unit content of 20 mole percent or higher and, as such, there may be mentioned, for example, a copolymer composed of 20 to 80 mole percent of TFE units, 20 to 80 mole percent of Et units and 0 to 60 mole percent of units derived from a monomer(s) (B) copolymerizable therewith.

As the above copolymerizable monomer (B), there may be mentioned, for example, a fluoroolefin represented by the general formula (viii):

CX⁹X¹⁰=CX⁷(CF₂)ₙX⁸ (viii)

(wherein X⁷, X⁹ and X¹⁰ are the same or different and each represents hydrogen or fluorine atom, X⁸ represents hydrogen, fluorine or chlorine atom and n represents an integer of 1 to 10) and PAVE represented by the general formula (ix):

CF₂=CF-ORf⁸ (ix)

(wherein Rf⁸ represents a perfluoroalkyl group containing 1 to 5 carbon atoms). These may be used singly or two or more of them may be used in combination.

Preferred among the copolymer (IV) is a copolymer composed of 0 to 60 mole percent of the sum of fluoroolefin units derived from a fluoroolefin (s) represented by the above general formula (viii) and/or PAVE units derived from a PAVE(s) represented by the above general formula (ix), 20 to 80 mole percent of TFE units and 20 to 80 mole percent of Et units.

As such copolymers, there may be mentioned, for example:
(IV-I) A Copolymer composed of 30 to 70 mole percent of TFE units, 20 to 55 mole percent of Et units and 0 to 10 mole percent of fluoroolefin units derived from a fluoroolefin(s) represented by the above general formula (viii);
(IV-II) A Copolymer composed of 30 to 70 mole percent of TFE units, 20 to 55 mole percent of Et units, 1 to 30 mole percent of HFP units and 0 to 10 mole percent of units derived from a monomer(s) copolymerizable therewith;
(IV-III) A Copolymer composed of 30 to 70 mole percent of TFE units, 20 to 55 mole percent of Et units and 0 to 10 mole percent or PAVE units derived from a PAVE (s) represented by the above general formula (ix); and so forth.

The copolymer (IV) mentioned above may contain or may not contain those copolymer (IV)-constituting units derived from the copolymerizable monomer(s) (B), including the cases where they are fluoroolefin units derived from a fluoroolefin(s) represented by the general formula (viii) and/or units derived form a PAVE(s) represented by the general formula (ix).

As the copolymer (V), there may be mentioned a polymer having a VdF unit content of 10 mole percent or higher. Preferred as such is, for example, a copolymer composed of 15 to 100 mole percent of VdF units, 0 to 85 mole percent of TFE units and 0 to 30 mole percent of the sum of HFP units and/or chlorotrifluoroethylene units.

As the copolymer (V), there may be mentioned, for example:
(V-I) A vinylidene fluoride homopolymer (hereinafter sometimes referred to as poly(vinylidene fluoride) [PVdF]);
(V-II) A copolymer composed of 30 to 99 mole percent of VdF units and 1 to 7.0 mole percent of TFE units;
(V-III) A copolymer composed of 10 to 90 mole percent of VdF units, 0 to 90 mole percent of TFE units and 0 to 30 mole percent of chlorotrifluoroethylene units; and
(V-IV) A copolymer composed of 10 to 90 mole percent of VdF units, 0 to 90 mole percent of TFE units and 0 to 30 mole percent of HFP units.

Preferred as the copolymer (V-IV) is a copolymer composed of 15 to 84 mole percent of VdF units, 15 to 84 mole percent of TFE units and 0 to 30 mole percent of HFP units.

Among the monomer units constituting the copolymers (III) to (V), those which may amount to 0 (zero) mole percent in the respective copolymers may be contained or may not be contained in the respective copolymers.

The perhalogenated fluorine-containing ethylenic polymer and the non-perhalogenated fluorine-containing ethylenic polymer preferably have an MFR of 0.1 to 70 (g/10 minutes). The MFR within the above range renders the laminate excellent in fuel impermeability and the environmental cracking resistance for a fuel. A more preferred lower limit to the MFR is 1 (g/10 minutes) and a more preferred upper limit thereto is 50 (g/10 minutes).

The MFR of the perhalogenated fluorine-containing ethylenic polymer and the non-perhalogenated fluorine-containing ethylenic polymer is a value obtained through measurement according to a test method of ASTM D1238, at 372 °C and under a load of 47 N. The MFR may be a value obtained through measurement according to the test method of ASTM D1238, under conditions of 265°C and 49 N, 297°C and 49 N, or 230°C and 49 N, or according to the test method of ASTM D3159, under conditions of 297°C and 49 N.

Two or more fluorine-containing ethylenic resin species may be used in combination. In the case of combined use of two or more such species, fluorine-containing ethylenic resins compatible with each other are preferably used since they can form a layer with no sharp dividing line as a result of admixture by melting, hence causing no delamination. The mixing ratio or layer thickness ratio can be adjusted so that the layers as a whole may acquire a preferred fuel permeability coefficient and a preferred melting point.

When the fluorine-containing ethylenic resin layer is made of two or more fluorine-containing ethylenic resin species, the compatibility-dependent respective interlayer adhesion can be secured, without introduction of such an adhesive functional group as mentioned above, by feeding the respective resin species employed, without preliminary mixing, into a coextruding machine or by placing layers separately prepared on top of each other, followed by thermal melting.

When the fluorine-containing ethylenic resin layer is made of the two or more fluorine-containing ethylenic resin species, the layer may also be made of a resin alloy prepared in advance by mixing up the respective resin species.

The fluorine-containing ethylenic resin mentioned above may have such an adhesive functional group or groups as mentioned above at main chain terminus or termini thereof or on side chains thereof.

The contents of the above-mentioned respective monomers in the fluorine-containing ethylenic resin are the values obtained by an appropriate combination of ¹⁹F-NMR analysis, infrared spectrophotometry [IR], elemental analysis and fluorescent X ray analysis as employed according to the monomer species.

The fluorine-containing ethylenic resin preferably has a melting point of 130 to 280°C, more preferably 150 to 280°C, from a facilitated coextrusion viewpoint.

The fluorine-containing ethylenic resin can be obtained by a polymerization method known in the art, for example by solution polymerization, emulsion polymerization or suspension polymerization. From an industrial viewpoint, it is preferably one obtained by the suspension polymerization.

The fluorine-containing ethylenic polymer may contain an electrically conductive filler incorporated therein. Incorporation of the conductive filler makes it possible to prevent an accumulation of static charges due to a friction between a fuel and the fluorine-containing ethylenic resin and thereby prevent fire or explosion otherwise possibly caused by static electricity discharge and further prevent cracking of or pinhole appearance in the fluorine-containing ethylenic resin and a resulting fuel leakage.

The conductive filler is not particularly restricted but includes, among others, a metal, carbon and a like conductive simple substance powder or conductive simple substance fiber; a powder of a conductive compound, for example zinc oxide; and a powder surface-treated for rendering the same conductive.

The conductive simple substance powder or conductive simple substance fiber is not particularly restricted but include, among others, copper, nickel and a like metal powder; iron, a stainless steel and a like metal fiber; carbon black, a carbon fiber, a carbon fibril described in Japanese Kokai Publication H03-174018, a carbon nanotube and a carbon nanohorn.

The powder surface-treated for rendering the same conductive is a powder obtained by surface treatment of glass beads, titanium oxide or a like nonconductive powder for rendering the same conductive. A method of treatment for rendering them conductive is not particularly restricted but may be, for example, metal sputtering and nonelectrolytic plating. Among the conductive filler mentioned above, carbon black is preferably used since it is advantageous from an economic viewpoint.

When the conductive filler mentioned above is incorporated in any of the fluorine-containing ethylenic resin mentioned above, pellets are preferably prepared in advance by melt kneading.

As for a pellet heating condition after melt kneading in the step of pelletization, a temperature not lower than the glass transition point of the fluorine-containing ethylenic resin but lower than the melting point of the fluorine-containing ethylenic resin is generally employed generally, the pelletization is carried out preferably at 130 to 200°C for 1 to 48 hours. Preliminary pelletization can result in uniform dispersion of the conductive filler in the fluorine-containing ethylenic resin in each layer to be obtained and thus provide the layer with a uniform conductivity.

A level of addition of the conductive filler can properly be selected according to the fluorine-containing ethylenic resin species, a conductive property required of the laminate and a molding condition, among others preferably, the conductive filler is used in an amount of 1 to 30 parts by mass per 100 parts by mass of the fluorine-containing ethylenic resin. A more preferred lower limit is 5 parts by mass, and a more preferred upper limit is 20 parts by mass.

The fluorine-containing ethylenic resin with the conductive filler incorporated therein preferably has a surface resistivity value of 1 x 10° to 1 x 10⁹ Ω·cm. A more preferred lower limit is 1 x 10² Ω·cm, and a more preferred upper limit is x 10³ Ω·cm,

The "surface resistivity value of the fluorine-containing ethylenic resin with the conductive filler incorporated therein" so referred to herein is a value obtained by measuring, using a battery-powered insulation tester, a surface resistivity value of an extrudate strand obtained by feeding the pellets obtained by melt kneading of the conductive filler and the fluorine-containing ethylenic resin into a melt indexer and heating them at an any temperature between 200 to 400°C in the melt indexer, followed by extrusion.

In the fluorine-containing ethylenic resin, there may be added, in addition to the above-mentioned conductive filler, one or more of various additives such as heat stabilizers and other stabilizers, reinforcing agents, fillers, ultraviolet absorbers, and pigments, each at an addition level at which the object of the invention will not be defeated. Each the fluorine-containing ethylenic resin layer can be improved in such properties as thermal stability, surface hardness, wear resistance, antistatic property and weathering resistance by addition of such additive or additives.

The molded article for a biodiesel fuel of the invention may comprise a layer comprising the fluorine-free organic material mentioned above.

The fluorine-free organic material is an organic material containing no fluorine atom. The fluorine-free organic material is preferably a resin capable of being coextruded with the fluorine-containing ethylenic resin layer.

The fluorine-free organic material is preferably a resin based on a polymer having a high crystallinity and more preferably a resin based on a polymer having high crystallinity, containing a polar functional group and thus showing a great intermolecular force.

The polar functional group is a functional group which has a polarity and can be involved in adhesion between the fluorine-free organic material layer and an adjacent layer. The polar functional group may be the same as the above-mentioned adhesive functional group which the CTFE copolymer has or may be a different functional group.

The polar functional group is not particularly restricted but includes those mentioned hereinabove as the adhesive functional groups and, further, cyano, sulfide and other groups; among them, carbonyloxy, cyano, sulfide and hydroxyl groups are preferred, and the hydroxyl group is more preferred.

As the fluorine-free organic material, there may be mentioned a polyamide resin, a polyolefin resin, a vinyl chloride-based resin, a polyurethane resin, a polyester resin, a polyaramid resin, a polyimide resin, a polyamideimide resin, a polyphenylene oxide resin, a polyacetal resin, a polycarbonate resin, an acrylic resin, a styrenic resin, an acrylonitrile/butadiene/styrene resin [ABS], a cellulosic resin, a polyetheretherketone resin [PEEK], a polysulfone resin, a polyethersulfone resin [PES], a polyetherimide resin and a like resin which is excellent in mechanical strength and can perform major roles in providing pressure resistance and maintaining the shape of the molded article (hereinafter referred to as "structural element resin") as well as an ethylene/vinyl alcohol copolymer-based resin, a polyphenylene sulfide resin, a polybutylene naphthalate resin, a polybutylene terephthalate resin and a like resin which is high in fuel and gas impermeability performance (hereinafter referred to as "impermeable resin").

When it comprises a layer (A) comprising such a structural element resin as mentioned above, the molded article for a biodiesel fuel of the invention becomes excellent in mechanical strength and, when it comprises a layer (E) comprising such an impermeable resin as mentioned above, it becomes excellent in fuel impermeability.

The polyamide resin mentioned above is based on a polymer having amide bond [-NH-C(=O)-] as a repeating unit within the molecule.

The polyamide resin may be either a so-called nylon resin based on a polymer in which the intramolecular amide bond is bound to an aliphatic structure(s) and/or an alicyclic structure(s), or a so-called aramid resin in which the intramolecular amide bond is bound to aromatic structures.

The nylon resin is not particularly restricted but includes, among others, a resin based on nylon 6, nylon 66, nylon 11, nylon 12, nylon 610, nylon 612, nylon 6/66, nylon 66/12, nylon 46, a metaxylylenediamine/adipic acid copolymer or the like polymer; two or more of these may also be used in combination.

The aramid resin is not particularly restricted but includes, for example, polyparaphenylene terephthalamide, polymetaphenylene isophthalamide and the like.

The polyamide resin mentioned above may also comprise macromolecules resulting from block copolymerization or graft copolymerization of a structure having no amide bond as a repeating unit onto part (s) of the polyamide molecule. As such a polyamide resin, there may be mentioned, for example, a resin based on a nylon 6/polyester copolymer, a nylon 6/polyether copolymer, a nylon 12/polyester copolymer, a nylon 12 /polyether copolymer and a like polyamide elastomer. These polyamide elastomers are obtained by block copolymerization of nylon oligomers and polyester oligomers via an ester bond or bonds or by block copolymerization of nylon oligomers and polyether oligomers via an ether bond or bonds. As the polyester oligomer, there may be mentioned, for example, polycaprolactone and polyethylene adipate and, as the polyether oligomer, there may be mentioned, for example, polyethylene glycol, polypropylene glycol and polytetramethylene glycol. Preferred as the above-mentioned polyamide elastomer is a nylon 6/polytetramethylene glycol copolymer or a nylon 12/polytetramethylene glycol copolymer.

Preferred among the polyamide resin mentioned above is nylon 6, nylon 66, nylon 11, nylon 12, nylon 610, nylon 612, nylon 6/66, nylon 66/12, a nylon 6/polyester copolymer, a nylon 6/polyether copolymer, a nylon 12/polyester copolymer and a nylon 12/polyether copolymer, among others, since a layer comprising such a polyamide resin, even when it is thin, can provide a sufficient level of mechanical strength; two or more of these may also be used in combination.

The polyolefin resin mentioned above is a resin comprising fluorine atom-free vinyl group-containing monomer-derived monomer units. The fluorine-free vinyl group-containing monomer unit is not particularly restricted but one having such a polar functional group as mentioned above is preferred for an intended use where interlaminar adhesion strength is required.

The polyolefin resin mentioned above is not particularly restricted but includes, among others, a polyolefin such as polyethylene, polypropylene and a high-density polyolefin and, further, a modified polyolefin obtained by modification of the above-mentioned polyolefin as modified with maleic anhydride etc., an epoxy-modified polyolefin and so forth.

The above-mentioned fluorine-free organic material may contain one or more of various additives such as, for example, heat stabilizers, other stabilizers, reinforcing agents, fillers, ultraviolet absorbers and pigments as added thereto each in an amount not defeating the objects of the present invention. Such an additive can improve the fluorine-free organic material mentioned above in thermal stability, surface hardness, wear resistance, antistatic properties, weathering resistance and other properties.

The polyamide resin mentioned above preferably has an amine value of 10 to 60 (equivalents/10⁶ g). When the amine value is within the range mentioned above, good interlaminar adhesion can be obtained even in the case of coextrusion under relatively low temperature conditions. If the amine value is lower than 10 (equivalents/10⁶ g), insufficient interlaminar adhesion strength may result. If it is in excess of 60 (equivalents/10⁶ g), a laminate obtained will be insufficient in mechanical strength and tends to discolor during storage, hence will be poor in handling properties. A preferred lower limit is 15 (equivalents/10⁶ g), a preferred upper limit is 50 (equivalents/10⁶ g) and a more preferred upper limit is 35 (equivalents/10⁶ g) .

The amine value so referred to herein is a value obtained by dissolving 1 g of the polyamide resin in 50 ml of m-cresol with heating and titrating the solution with a 1/10 N aqueous solution of p-toluenesulfonic acid using thymol blue as an indicator and, unless otherwise specified, it means an amine value of the polyamide resin prior to lamination. The amino groups which the polyamide resin before lamination has are considered to be partly consumed in adhesion to an adjacent layer. Since, however, the number of amino groups consumed in such a way is very small relative to the total content thereof, the amine value of the polyamide resin before lamination is substantially the same as the amine value thereof in the molded article for a biodiesel fuel of the invention.

The molded article for a biodiesel fuel of the invention may comprise an adhesive layer (S) and, when it comprises the adhesive layer (S), the interlaminar adhesion is improved.

As a typical example of the adhesive layer (S), there may be mentioned an adhesive function group-containing TFE/Et/HFP copolymer, a functional group-modified polyethylene species and a nylon having high amine value, and the adhesive layer can be properly selected according to the properties of two layers to be bonded together.

From among the layers of the molded article for a biodiesel fuel of the present invention, at least one layer has preferably a fuel permeability coefficient no greater than 0.5 g·mm/m²/day. The fuel permeability coefficient of the fluorine-containing ethylenic resin layer is preferably no greater than 0.4 g·mm/m²/day. The molded article for a biodiesel fuel as well has preferably low fuel permeability. Fuel permeability can be evaluated on the basis of the permeability coefficient of a dummy fuel.

The fuel permeability coefficient so referred to herein is a value determined by mounting a sheet obtained from a measurement target resin in a cup for the fuel permeability coefficient measurement containing an isooctane/toluene/ethanol mixed solvent prepared by mixing together isooctane, toluene and ethanol in a volume ratio of 45:45:10 and measuring a change in mass at 60°C, followed by calculation.

The molded article for a biodiesel fuel of the invention preferably has the above-mentioned fuel permeation rate of not higher than 1.5 g·mm/m²/day.

The molded article for a biodiesel fuel of the invention, for which the fuel permeation rate is within the above range, can have a high level of resistance to fuel permeation. So long as the fuel permeation rate is within the above range, a lower limit thereto may be set at 0.1 g/m²/day. A preferred upper limit thereto is 1.0 g/m²/day, a more preferred upper limit thereto is 0.9 g/m²/day and a still more preferred upper limit thereto is 0.8 g/m²/day.

The fuel permeation rate so referred to herein is the mass of a fuel permeating per unit area per day and is a value obtained by measuring the mass of permeation of an isooctane/toluene/ethanol mixed solvent [CE10] composed of isooctane, toluene and ethanol in a volume ratio of 45:45:10 at 60°C according to SAE J 1737.

The present invention is also a degradation inhibition method, comprising a step of molding a molded article comprising the fluorine-containing ethylenic resin layer; and a step of inhibiting degradation of the molded article by using the fluorine-containing ethylenic resin layer, in the molded article, so as to come into contact with the biodiesel fuel.

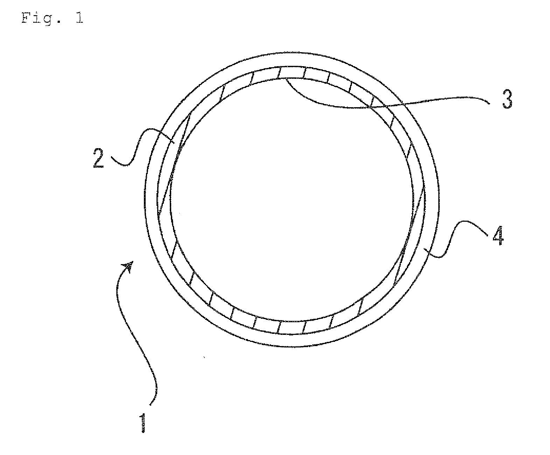

Fig. 1 illustrates a hose as an embodiment of the molded article of the present invention. The hose 1 has a fluorine-containing ethylenic resin inner layer 2, and a fluorine-free organic material outer layer 4. The inner layer 2 is bonded with the outer layer 4. The inner layer 2 forms a hose inner surface 3 that can come into contact with the biodiesel fuel. The inner layer 2 has high durability against the biodiesel fuel, and hence the hose 1 is not degraded by the biodiesel fuel flowing through the hose. The outer layer 4 imparts mechanical strength and flexibility to the hose 1. The outer layer 4 may be provided with other layers, such as a reinforcing layer, on the outer periphery.

The step of molding the molded article is preferably a step of molding the molded article in which the fluorine-containing ethylenic resin layer is provided on the metal member; a step of molding the molded article in which the laminate comprising the fluorine-containing ethylenic resin layer and the fluorine-free organic material layer is provided on the metal member; or a step of molding the laminate comprising the fluorine-containing ethylenic resin layer and the fluorine-free organic material layer.

The fluorine-containing ethylenic resin layer that makes up the molded article for a biodiesel fuel of the present invention may be a single layer comprising one type of fluorine-containing ethylenic resin, or may be a laminate comprising two or more layers at least one of which is a fluorine-containing ethylenic resin layer. Examples of the laminate include, for instance, laminates having two to five layers.

As preferred layer constitution examples of the laminate having a two-layer structure, there may be mentioned, in the order from the biodiesel fuel-contacting side, the layer (C)/layer (P), layer (P)/layer (C) and layer (C)/layer (A) structures, among others.

As preferred layer constitution examples of the laminate having a three-layer structure, there may be mentioned the layer (P)/layer (C)/layer (A), layer (C)/layer (E)/layer (A), layer (P)/layer (C)/layer (P) and layer (C)/layer (A)/layer (C) structures, among others.

As preferred layer constitution examples of the laminate having a four-layer structure, there may be mentioned the layer (P)/layer (E)/layer (C)/layer (A), layer (P)/layer (S)/layer (C)/layer (A), layer (P)/layer (C)/layer (S)/layer (A), layer (P)/layer (C)/layer (E)/layer (A), layer (P)/layer (C)/layer (A)/layer (C), layer (C)/layer (E)/layer (S)/layer (A), layer (C)/layer (S)/layer (E)/layer (A), layer (C)/layer (E)/layer (C)/layer (A) and layer (C)/layer (E)/layer (A)/layer (C) structures, among others.

As preferred layer constitution examples of the laminate having a five-layer structure, there may be mentioned the layer (C)/layer (S)/layer (E)/layer (S)/layer (A), layer (P)/layer (C)/layer (A)/layer (C)/layer (P), layer (P)/layer (C)/layer (E)/layer (S)/layer (A), layer (P)/layer (C)/layer (E)/layer (C) /layer (A) and layer (P)/layer (C)/layer (E)/layer (A)/layer (C) structures, among others.

The above-mentioned layer (P), layer (C), layer (A), layer (E) and layer (S) each may have a single layer structure or a multilayer structure comprising two or more layers. For example, when the layer (P) has a multilayer structure comprising two or more layers, it may comprise a fluorine-containing ethylenic resin layer containing such an electrically conductive filler as mentioned above and a fluorine-containing ethylenic resin layer containing no conductive filler.

The molded article for a biodiesel fuel of the invention may further comprise a layer other than the above-mentioned layer (P), layer (C), layer (A), layer (E) and layer (S). The other layer is not particularly restricted but there may be mentioned, for example, a protective layer, a colored layer, a marking layer, and a dielectric layer for antistatic, among others; the protective layer and/or the dielectric layer, among others, preferably constitutes the outermost layer of the laminate in view of the function thereof.

The molded article for a biodiesel fuel of the invention, it is not always necessary that a boundary between the adjacent layers in contact with each other be distinct. Thus, the boundary may show a layer structure having a concentration gradient resulting from mutual penetration, from the contact surface, of the molecular chains of the polymers constituting the adjacent layers.

As for the method of molding the molded article for a biodiesel fuel of the invention, there may be mentioned, for example, (1) a method comprising molding respective laminate-constituting resins by coextrusion in a molten state (coextrusion molding) to thereby form a laminate having a multilayer structure to thereby attain thermal fusion bonding (melt adhesion) among layers in one step.

As other methods of molding the molded article for a biodiesel fuel of the invention in addition to the above (1), there may be mentioned, among others, (2) a method comprising placing respective layers prepared separately using extruders one on top of the other, followed by interlaminar adhesion by thermal fusion, (3) a method comprising forming a laminate by extruding, through an extruder, a molten resin onto the surface of a layer prepared in advance, and (4) a method comprising applying, in the manner of electrostatic coating, a resin to constitute an adjacent layer onto the surface of a layer prepared in advance and heating the thus-obtained coated matter collectively or from the coated side to thereby form a layer by thermal melting of the resin subjected to coating.

When the molded article for a biodiesel fuel of the invention is a tube or hose, there may be mentioned, for example, (2a) a method which corresponds to the above-mentioned method (2) and comprises separately forming respective cylindrical layers using extruders and covering the layer to become an inner layer with the adjacent layer in the form of a heat-shrinkable tube, (3a) a method which corresponds to the above-mentioned method (3) and comprises first forming a layer to become an inner layer using an inner layer extruder and forming a layer coming in contact with the inner layer on the peripheral surface thereof using an outer layer extruder, and (4a) a method which corresponds to the above-mentioned method (4) and comprises applying, in the manner of electrostatic coating, a resin layer to constitute an inner layer to the inside of a layer to come into contact with the inner layer and placing the coated matter in a heating oven to heat the same as a whole or inserting a rod-shaped heating device into the cylindrical coated article and heating the same from the inside, to thereby mold the inner layer by melting the inner layer-constituting resin by heating.

When materials for the respective layers constituting the molded article for a biodiesel fuel of the invention are coextrudable, it is a general practice to mold the laminate by the above-mentioned coextrusion method (1). As the techniques of the coextrusion molding mentioned above, there may be mentioned those multilayer coextrusion methods which are known in the art, for example multi-manifold method and feed block method.

In the above-mentioned molding methods (2) and (3), the surface of a layer to come into contact with another layer may be subjected to a surface treatment so that the interlaminar adhesion may be enhanced. As such a surface treatment, there may be mentioned an etching treatment such as sodium etching treatment; corona treatment; and a plasma treatment such as low-temperature plasma treatment.

Preferred as the method of molding are the above-mentioned method (1) and the above-mentioned methods (2) and (3) in which lamination is carried out after surface treatment. Most preferred is the method (1), however.

The molded article for a biodiesel fuel of the present invention may be manufactured by molding a single layer comprising the fluorine-containing ethylenic resin, using an extruder, and bonding the obtained layer to the metal member. The molded article may also be manufactured by molding the laminate obtained in accordance with the above-described molding method, and bonding the obtained laminate to the metal member.

The molded article for a biodiesel fuel of the present invention may be manufactured by coating the metal member with a dispersion of the fluorine-containing ethylenic resin, or may be manufactured by applying a coating comprising the fluorine-free organic material onto the metal member, and applying next thereon a dispersion of the fluorine-containing ethylenic resin.

The molded article for a biodiesel fuel of the present invention may be manufactured by electrostatically applying a powder coating of the fluorine-containing ethylenic resin onto the metal member, or mary be manufactured by applying a coating comprising the fluorine-free organic material onto the metal member, followed by electrostatic application of a powder coating of the fluorine-containing ethylenic resin.

The molded article for a biodiesel fuel of the present invention can be used in applications such as a film, a sheet, a diaphragm, a packing, a tube for an automobile fuel, a hose for an automobile fuel, a tube or hose for a fuel such as a refueling hose (fuel supply hose), an underground tube in a gas station; a bottle, a container and a tank such as an automobile fuel tank; various automotive seals such as a carburetor flange gasket and a fuel pump 0-ring; as well as various seals in machinery, such as a hydraulic system seal.

The above tube or hose can have a wavy region in a portion thereof. Such a wavy region is formed in a region halfway the length of the entire hose. The shape of the wavy region may be, for instance, wavy, corrugated or convoluted.

A tube or hose having a plurality of such wavy annular folds in a region thereof, it can be compressed on one annular side in that region and elongated on the other side outwardly and therefore can be bent at any angle with ease without accompanying stress fatigue or delamination.

The method of shaping the wavy region is not restricted but the region can be easily shaped by the conventional forming method, for example by first molding a straight tube and then subjecting the same to mold forming, for instance, to a desired wavy shape.

Preferred layer constitution of the molded article for a biodiesel fuel of the invention is not particularly restricted, for example, there may be mentioned:
Laminates consisting of:
   Layer 1: Layer made of the adhesive functional group-containing fluorine-containing ethylenic resin, and
   Layer 2: Layer made of the polyamide rein;
Laminates consisting of:
   Layer 1: Layer made of the adhesive functional group-containing fluorine-containing ethylenic resin,
   Layer 2: Layer made of the adhesive functional group-containing fluorine-containing ethylenic resin, and
   Layer 3: Layer made of the polyamide resin; and
Laminates consisting of:
   Layer 1: Layer made of the adhesive functional group-containing fluorine-containing ethylenic resin,
   Layer 2: Layer made of the ethylene/vinyl alcohol copolymer,
   Layer 3: Layer made of the modified polyolefin resin, and
   Layer 4: Layer made of the high-density polyolefin resin.

As preferred examples of the layer constitution of the molded article for a biodiesel fuel of the invention, there may also be mentioned laminates consisting of:
Layer 1: Layer made of the fluorine-containing ethylenic resin (optionally with the conductive filler incorporated therein),
Layer 2: Layer made of the CTFE copolymer, and
Layer 3: Layer made of the polyamide resin; more preferred among them are laminates consisting of:
   Layer 1: Layer made of the copolymer (III) (optionally with the conductive filler incorporated therein),
   Layer 2: Layer made of the adhesive functional group-containing CTFE copolymer, and
   Layer 3: Layer made of the polyamide resin.
It is also preferred to form such a laminate structure on the metal member.

As preferred examples of the layer constitution of the molded article for a biodiesel fuel of the invention, there may also be mentioned laminates consisting of:
Layer 1: Layer made of the fluorine-containing ethylenic resin (optionally with the conductive filler incorporated therein),
Layer 2: Layer made of the polyamide resin,
Layer 3: Layer made of the CTFE copolymer, and
Layer 4: Layer of the polyamide resin; more preferred among them are laminates consisting of:
   Layer 1: Layer made of the copolymer (IV) (optionally with the conductive filler incorporated therein),
   Layer 2: Layer made of the polyamide resin,
   Layer 3: Layer made of the adhesive functional group-containing CTFE copolymer, and
   Layer 4: Layer made of the polyamide resin; still more preferred among them are laminates consisting of:
      Layer 1: Layer made of the copolymer (IV-II) (optionally with the conductive filler incorporated therein),
      Layer 2: Layer made of the polyamide resin,
      Layer 3: Layer made of the adhesive functional group-containing CTFE copolymer, and
      Layer 4: Layer made of the polyamide resin.
It is also preferred to form such a laminate structure on the metal member.

The layers of the molded article for a biodiesel fuel are stacked in the order of the respective layer numbers. Layer 1 is the layer to be contacted with the biodiesel fuel.

### EFFECTS OF THE INVENTION

Thanks to the above features, the molded article for a biodiesel fuel of the present invention has excellent durability against a biodiesel fuel.

### BEST MODE FOR CARRYING OUT THE INVENTION

The following examples illustrate the present invention in further detail. These examples are, however, by no means limitative of the scope of the invention.

### (1) Monomer composition determination of Copolymer

It was determined based on the results of ¹⁹F-NMR spectrometry and the chlorine content obtained upon elemental analysis.

### (2) Melting point (Tm) determination

The melting peak was recorded using a Seiko model differential scanning calorimeter [DSC] at a programming rate of 10°C/minute, and the temperature corresponding to the maximum value was reported as the melting point (Tm).

### Examples

### [Test fuel]

In the tests there was used a commercially available fuel Nexsol BD-0100 Biodiesel (product of Peter Cremer) (according to ASTM D6751). The procured biodiesel, stored with unopened state at normal temperature, was used as the "un-degraded fuel". Meanwhile, a biodiesel degraded by being open to the atmosphere and heated at 80°C for 6 hours at a stirring speed of 30 rpm, to a peroxide value (POV) of 1800 to 2400 mg/kg, was used as the "degraded fuel".

### [Test materials]

The following materials were prepared for carrying out the examples and comparative examples.

### [EFEP]

As a non-conductive EFEP there was used EFEP RP-5000, product of Daikin Industries, having a MFR of 28 g/10 min (according to ASTM D1238, 265°C, load 49 N). As a conductive EFEP there was used EFEP RP-5000AS, product of Daikin Industries, having a MFR of 4.8 g/10 min (according to ASTM D1238, 265°C, load 49 N).

### [ETFE-1]

As a non-conductive ETFE there was used ETFE EP-610, product of Daikin Industries, having a MFR of 30 g/10 min (according to ASTM D3159, 297°C, load 49 N). As a conductive ETFE there was used ETFE EP-610AS, product of Daikin Industries, having a MFR of 5.6 g/10 min (according to ASTM D1238, 265°C, load 49 N).

### [ETFE-2]

As a non-conductive ETFE having a composition different from that of the ETFE-1 there was used ETFE EP-7000, product of Daikin America, Inc., having a MFR of 22.2 g/10 min (according to ASTM D3159, 297°C, load 49 N).

### [CTFE copolymer]

A jacketed glass-lined polymerization vessel equipped with a stirrer and having a capacity for 174 kg of water was charged with 51 kg of demineralized water, the interior of the vessel was thoroughly purged with pure nitrogen gas, and the nitrogen gas was removed by evacuation. Then, 40.6 kg of octafluorocyclobutane, 0.7 kg of chlorotrifluoroethylene (CTFE), 4.5 kg of tetrafluoroethylene (TFE) and 2.6 kg of perfluoro(propyl vinyl ether) (PPVE) were fed into the vessel under pressure. The temperature was adjusted to 35°C, after which there were added 0.33 kg of a 50% (by mass) solution of di-n-propyl peroxydicarbonate (NPP) in methanol, as the polymerization initiator, to initiate polymerization. During polymerization, a monomer mixture prepared so as to have the same composition as the desired copolymer composition was additionally fed such that the pressure inside the vessel is maintained at 0.8 MPa. After addition of 35 kg of the monomer mixture, the residual gas in the vessel inside was bled off, and the polymerization was terminated. The resulting polymer was taken out of the polymerization vessel, was washed with demineralized water, was dried, and was then melt-pelletized in a φ50 mm single-screw extruder at a cylinder temperature of 290°C. The resulting pellets were subjected to a thermal treatment at 190°C for 24 hours. Eventually there were obtained about 35 kg of CTFE copolymer pellets having a monomer composition of CTFE:TFE:PPVE=22.5:75.0:2.5 (mol%), a melting point of 246°C, and a MFR 19 g/10 min (according to ASTM D1238, 297°C, load 49 N).

### [PVdF]

There was used PVdF VP-825, product of Daikin Industries, having a MFR of 1.3 g/10 min (according to ASTM D1238, temperature 230°C, load 49 N).

### [PPS]

There was used Torelina A900, product of Toray Industries, Inc, having a MFR of 30 g/10 min (297°C, load 49 N).

### [PA11]

There was used Rilsan PA11 BESN P20 Blk TL, product of Arkema, Inc, having a MFR of 2g/10 min (235°C, load 49 N).

### [EVOH]

There was used Eval F101, product of Kuraray Co., Ltd., having a MFR of 3.8 g/10 min (210°C, load 21.2 N).

### [Test piece preparation]

Films were prepared to a thickness of 0.1 mm by extrusion molding of the various resins under the conditions set forth in Table 2. Micro dumbbell test pieces according to ASTM D1708 were punched out of the films.

**[Table 2]**

| | Cylinder temperature (°C) | | | Head temperature (°C) | Die temperature (°C) | | Spin rate (rpm) |
|---|---|---|---|---|---|---|---|
| | Cylinder 1 | Cylinder 2 | Cylinder 3 | | Die 1 | Die 2 | |
| RP-5000 | 255 | 270 | 275 | 280 | 290 | 290 | 20 |
| RP-5000AS | 265 | 280 | 285 | 290 | 300 | 300 | 20 |
| EP-610 | 275 | 290 | 295 | 300 | 310 | 310 | 20 |
| EP-610AS | 285 | 300 | 305 | 310 | 320 | 320 | 20 |
| EP-7000 | 275 | 290 | 295 | 300 | 310 | 310 | 18 |
| CTFE copolymer | 270 | 280 | 285 | 290 | 300 | 300 | 12 |
| PVdF | 255 | 270 | 275 | 280 | 290 | 290 | 20 |
| PPS | 300 | 305 | 315 | 320 | 325 | 330 | 30 |
| PA11 | 235 | 240 | 245 | 250 | 250 | 250 | 30 |
| EVOH | 180 | 200 | 205 | 210 | 215 | 215 | 60 |

### [Chemical resistance test]

A glass container was filled with the test fuel, and the test piece fixed to a PTFE plate by way of a PTFE unsintered tape was completely immersed in the test fuel. The container was sealed and kept at 125°C. In the 250-hour immersion test the test piece was taken out after 250 hours from the start of immersion. In the 500-hour immersion, the test fuel was replaced after 250 hours from the start of immersion, and the test piece was taken out after further 250-hour immersion (total 500-hour immersion). In the 1000-hour immersion test, similarly, replacement of the test fuel was repeated four times, every 250 hours, and the test piece was taken out after a total 1000-hour immersion. The fuel adhered to the surface of the test piece that had been taken out of the test fuel was wiped off. The test piece was used for the tests below.

### [Tensile test]

The tensile test was carried out according to ASTM D1708, under conditions of grip distance 22.2 mm and pulling rate 100 mm/min, using a Tensilon universal testing machine (RTC-1225A, product of Orientec Co., Ltd.). There were measured maximum stress, elongation at break, and tensile modulus. The measurements were carried out with n = 3, to obtain an average value for each magnitude. The test results are given in Table 3 (maximum stress (MPa)), Table 4 (elongation at break (%)) and Table 5 (tensile modulus (MPa)).

**[Table 3]**

| | Halogen content (% by mass) | Immersion time in undegraded fuel | | | Immersion time in degraded fuel | | |
|---|---|---|---|---|---|---|---|
| Immersion time | | 250hr | 500hr | 1000hr | 250hr | 500hr | 1000hr |
| CTFE copolymer | 76 | 88.0 | 86.8 | 84.3 | 93.8 | 91.7 | 89.3 |
| EP-610 | 67 | 95.3 | 98.5 | 95.0 | 96.3 | 95.9 | 89.0 |
| EP-610AS | | 93.7 | 95.9 | 102.4 | 102.9 | 98.7 | 99.7 |
| RP-5000 | 63 | 99.0 | 101.7 | 103.5 | 97.9 | 98.7 | 96.7 |
| RP-5000AS | | 80.4 | 89.8 | 96.2 | 94.9 | 95.3 | 88.3 |
| EP-7000 | | 91.6 | 105.3 | 93.3 | 99.1 | 95.1 | 98.2 |
| PVdF | 59 | 80.3 | 77.2 | 77.5 | 82.6 | 80.1 | 83.1 |
| PPS | 0 | 75.6 | 71.0 | 71.7 | 72.8 | 68.1 | 68.5 |
| PA11 | | 74.9 | 65.3 | 68.8 | 66.9 | 68.0 | 32.4 |
| EVOH | | 125.2 | 119.6 | 122.1 | 125.0 | 122.4 | 120.8 |

**[Table 4]**

| | Halogen content (% by mass) | Immersion time in undegraded fuel | | | Immersion time in degraded fuel | | |
|---|---|---|---|---|---|---|---|
| Immersion time | | 250hr | 500hr | 1000hr | 250hr | 500hr | 1000hr |
| CTFE copolymer | 76 | 94.7 | 87.5 | 92.5 | 97.2 | 97.2 | 94.3 |
| EP-610 | 67 | 100.2 | 98.2 | 96.4 | 98.3 | 98.3 | 90.0 |
| EP-610AS | | 94.7 | 88.6 | 105.0 | 103.4 | 97.2 | 97.4 |
| RP-5000 | 63 | 111.0 | 109.7 | 117.6 | 109.2 | 113.3 | 105.7 |
| RP-5000AS | | 89.3 | 103.9 | 113.0 | 106.7 | 112.7 | 98.8 |
| EP-7000 | | 94.8 | 97.5 | 93.6 | 100.0 | 96.6 | 96.5 |
| PVdF | 59 | 24.5 | 27.5 | 18.1 | 35.0 | 13.1 | 36.3 |
| PPS | 0 | 47.5 | 39.5 | 36.6 | 40.8 | 27.6 | 17.3 |
| PA11 | | 66.1 | 25.6 | 16.3 | 23.7 | 14.4 | 2.0 |
| EVOH | | 38.2 | 28.7 | 14.1 | 12.9 | 10.2 | 8.2 |

**[Table 5]**

| | Halogen content (% by mass) | Immersion time in undegraded fuel | | | Immersion time in degraded fuel | | |
|---|---|---|---|---|---|---|---|
| Immersion time | | 250hr | 500hr | 1000hr | 250hr | 500hr | 1000hr |
| CTFE copolymer | 76 | 94.6 | 101.3 | 99.1 | 98.5 | 87.6 | 96.4 |
| EP-610 | 67 | 81.0 | 81.9 | 85.8 | 86.3 | 82.5 | 84.6 |
| EP-610AS | | 87.6 | 94.0 | 92.0 | 90.4 | 94.3 | 91.7 |
| RP-5000 | 63 | 90.2 | 92.2 | 91.7 | 98.4 | 93.8 | 93.7 |
| RP-5000AS | | 96.0 | 100.0 | 98.2 | 94.9 | 85.6 | 91.9 |
| EP-7000 | | 80.8 | 84.6 | 85.3 | 86.0 | 85.7 | 83.6 |
| PVdF | 59 | 76.7 | 72.4 | 76.8 | 83.8 | 73.0 | 78.6 |
| PPS | 0 | 73.8 | 89.9 | 91.4 | 75.4 | 90.9 | 90.8 |
| PA11 | | 135.1 | 151.3 | 165.4 | 150.7 | 147.1 | 148.0 |
| EVOH | | 108.0 | 64.1 | 85.0 | 84.8 | 96.8 | 78.0 |

### [Measurement of swelling]

The weight of each test piece was measured, before and after immersion, using an electronic balance having 0.1 mg precision.

The swelling ratio (%) upon immersion was determined on the basis of [(weight after immersion)-(weight before immersion)]/(weight before immersion) × 100. The test results are given in Table 6.

**[Table 6]**

| | Halogen content (% by mass) | Immersion time in undegraded fuel | | | Immersion time in degraded fuel | | |
|---|---|---|---|---|---|---|---|
| Immersion time | | 250hr | 500hr | 1000hr | 250hr | 500hr | 1000hr |
| CTFE copolymer | 76 | 0.21 | 0.14 | 0.11 | 0.43 | 0.27 | 0.23 |
| EP-610 | 67 | 0.42 | 0.39 | 0.21 | 0.72 | 0.37 | 0.43 |
| EP-610AS | | 0.47 | 0.35 | 0.42 | 0.80 | 0.65 | 0.50 |
| RP-5000 | 63 | 0.06 | 0.06 | -0.18 | 0.36 | 0.26 | 0.26 |
| RP-5000AS | | 0.27 | 0.32 | 0.06 | 0.51 | 0.27 | 0.44 |
| EP-7000 | | 0.53 | 0.53 | 0.45 | 0.84 | 0.64 | 0.60 |
| PVdF | 59 | 0.89 | 0.60 | 0.58 | 1.01 | 0.81 | 0.71 |
| PPS | 0 | 13.16 | 13.57 | 13.52 | 13.33 | 13.17 | 13.44 |
| PA11 | | -4.82 | -4.55 | -3.41 | -1.08 | 0.06 | 7.33 |
| EVOH | | -2.09 | -1.89 | -1.87 | -0.22 | -0.37 | 0.86 |

### [Evaluation of the degree of degradation of the test fuel]

The degree of degradation of the test fuel was checked by measuring the peroxide value (POV) and the total acid number (TAN), in accordance with the test method described below, immediately before start of immersion, and immediately before test fuel replacement. The test results are given in Table 7.

### [POV measurement]

It was measured in accordance with JPI-5S-46-96.

### [TAN measurement]

It was measured in accordance with JIS-K-2501.

**[Table 7]**

| | | Immediately prior to immersion | Upon replacement after 250 hours | Upon replacement after 500 hours | Upon replacement after 750 hours |
|---|---|---|---|---|---|
| Undegraded fuel | Peroxide value (POV) (mg/kg) | 37 | 32 | 33 | 37 |
| | Total acid number (TAN) (mgKOH/g) | 0.12 | 0.12 | 0.18 | 0.14 |
| Degraded fuel | Peroxide value (POV) (mg/kg) | 1880 | 1382 | 2251 | 2332 |
| | Total acid number (TAN) (mgKOH/g) | 0.2 | 0.21 | 0.12 | 0.17 |

### INDUSTRIAL APPLICABILITY

The molded article for a biodiesel fuel of the present invention can be suitably used in a fuel tank, a fuel tube, a fuel hose and the like for the biodiesel fuel.

### BRIEF DESCRIPTION OF THE DRAWINGS

### [Fig. 1]

Fig. 1 is a schematic diagram illustrating an example of the molded article of the present invention.

### DESCRIPTION OF REFERENCE NUMERALS

1. hose
2. fluorine-containing ethylenic resin inner layer
3. hose inner surface
4. fluorine-free organic material outer layer

## Claims

1. A molded article for a biodiesel fuel
wherein a surface to be contacted with a biodiesel fuel is made of a fluorine-containing ethylenic resin.

2. The molded article for a biodiesel fuel according to claim 1,
which comprises a fluorine-containing ethylenic resin layer on a metal member.

3. The molded article for a biodiesel fuel according to claim 1,
which comprises a laminate comprising a fluorine-containing ethylenic resin layer and a fluorine-free organic material layer, on a metal member.

4. The molded article for a biodiesel fuel according to claim 1,
which comprises a laminate comprising a fluorine-containing ethylenic resin layer and a fluorine-free organic material layer.
